Europäisches Patentamt

**European Patent Office**

Office européen des brevets

(11) Numéro de publication: **0 232 633**
**A1**

## (12) DEMANDE DE BREVET EUROPEEN

(21) Numéro de dépôt: **86402351.0**

(22) Date de dépôt: **20.10.86**

(51) Int. Cl.⁴: **F16G 11/04**

(30) Priorité: **28.10.85 FR 8515982**

(43) Date de publication de la demande:
**19.08.87 Bulletin  87/34**

(84) Etats contractants désignés:
**DE GB IT**

(71) Demandeur: **COMMISSARIAT A L'ENERGIE ATOMIQUE**
**31/33, rue de la Fédération**
**F-75015 Paris(FR)**

(72) Inventeur: **Danancher, Gilbert**
**Rue du Village**
**F-01000 Saint Denis Le Bourg(FR)**
Inventeur: **Marcelou, René**
**97 Bis, Boulevard Jean Jaurès**
**F-94260 Fresnes(FR)**

(74) Mandataire: **Mongrédien, André et al**
**c/o BREVATOME 25, rue de Ponthieu**
**F-75008 Paris(FR)**

(54) **Dispositif de fixation d'un culot de maintien sur l'extremité d'un cable.**

㉗ Il comprend un culot de maintien (22), deux demi-coquilles (16) présentant chacune une surface interne (16a) prévue pour s'adapter à l'embout tronconique (12) et une surface externe (16b) comportant une partie tronconique (16c), deux demi-bagues (20) comportant chacune une surface interne qui s'adapte à la partie tronconique (16c) des demi-coquilles (16), ledit culot de maintien comportant un logement (4) pour la réception des deux demi-coquilles (16) et des deux demi-bagues (20).

FIG. 1

EP 0 232 633 A1

# DISPOSITIF DE FIXATION D'UN CULOT DE MAINTIEN SUR L'EXTREMITE D'UN CABLE

L'invention concerne un dispositif de fixation d'un culot à l'extrémité d'un câble, destiné à être assemblé au câble après la mise en place de ce dernier.

Ce dispositif s'applique particulièrement à la fixation de l'extrémité d'un câble, généralement métallique, de grande longueur, dont une extrémité seulement est accessible, l'autre extrémité étant inaccessible parce qu'elle est déjà fixée ou utilisée de telle sorte qu'un culot de fixation ne peut pas être introduit par cette autre extrémité.

On connaît déjà des embouts d'extrémité de câble pour un câble comportant un embout tronconique moulé dont la liaison avec le câble s'effectue par des coins qui sont mis en place à la masse. Cependant, cette solution présente l'inconvénient de ne pas être démontable facilement. En outre, les faces des coins qui sont en contact avec le câble sont diamantées. Elles marquent donc les fils de la couche extérieure du câble, et en arrachent le métal lors de la mise en place des coins. De plus, un effort de compression important est exercé entre le câble et les coins. Cet effort de compression provoque une déformation du câble.

La présente invention a précisément pour objet un dispositif de fixation d'un culot de maintien sur l'extrémité d'un câble qui remédie à ces inconvénients. Il a pour but de réduire le temps de mise en place du câble ainsi que le coût du dispositif de freinage et d'arrêt du câble. En outre, il doit être démontable.

A cet effet, l'invention a pour objet un dispositif de fixation d'un culot de maintien sur l'extrémité d'un câble, cette extrémité étant munie d'un embout tronconique, caractérisé en ce qu'il comprend un culot de maintien, deux demi-coquilles présentant chacune une surface interne prévue pour s'adapter à l'embout tronconique et une surface externe comportant une partie tron conique, deux demi-bagues comportant chacune une surface interne qui s'adapte à la partie tronconique des demi-coquilles, ledit culot de maintien comportant un logement pour la réception des deux demi-coquilles et des deux demi-bagues.

De préférence, chacune des deux demi-coquilles comporte une partie cylindrique qui fait saillie au-delà du culot de maintien, une rainure étant prévue dans la partie cylindrique pour recevoir deux demi-rondelles.

De préférence également, chacune des deux demi-coquilles comporte une vis de pression qui prend appui sur lesdites demi-rondelles pour appliquer l'une contre l'autre les surfaces coniques desdites demi-bagues et desdites demi-coquilles.

D'autres caractéristiques et avantages de l'invention apparaîtront encore à la lecture de la description qui suit d'un exemple de réalisation donné à titre illustratif et nullement limitatif, en référence aux dessins annexés, sur lesquels :

la figure 1 représente une vue en section longitudinale d'un dispositif de fixation conforme à l'invention ;

-la figure 2 est une vue en perspective d'un moule qui sert à réaliser un embout moulé à l'extrémité d'un câble métallique ;

-les figures 3a à 3e illustrent les différentes étapes du montage d'un dispositif de fixation conforme à l'invention à l'extrémité d'un câble muni d'un embout tronconique.

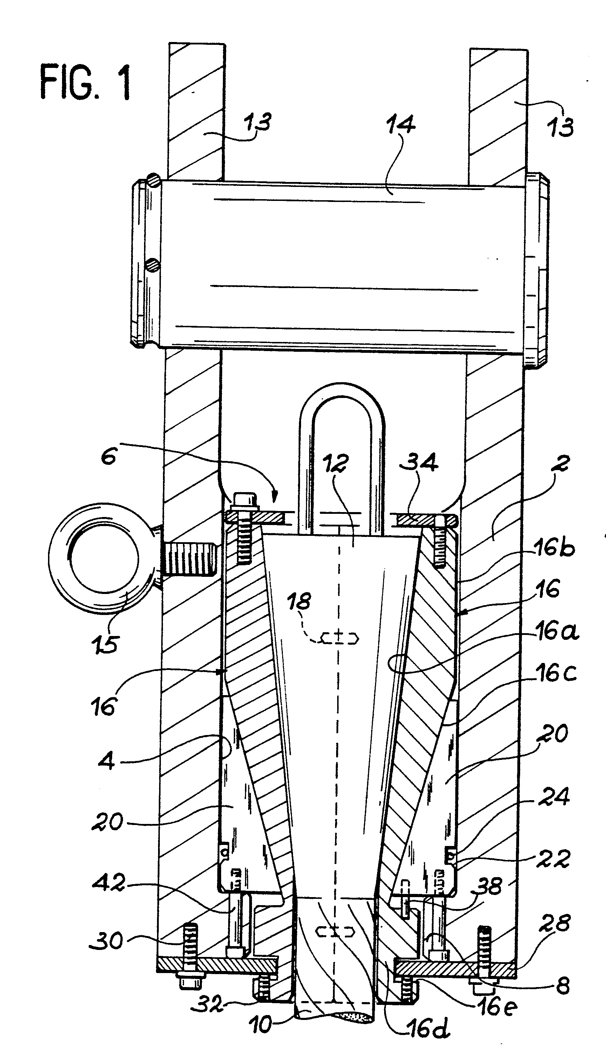

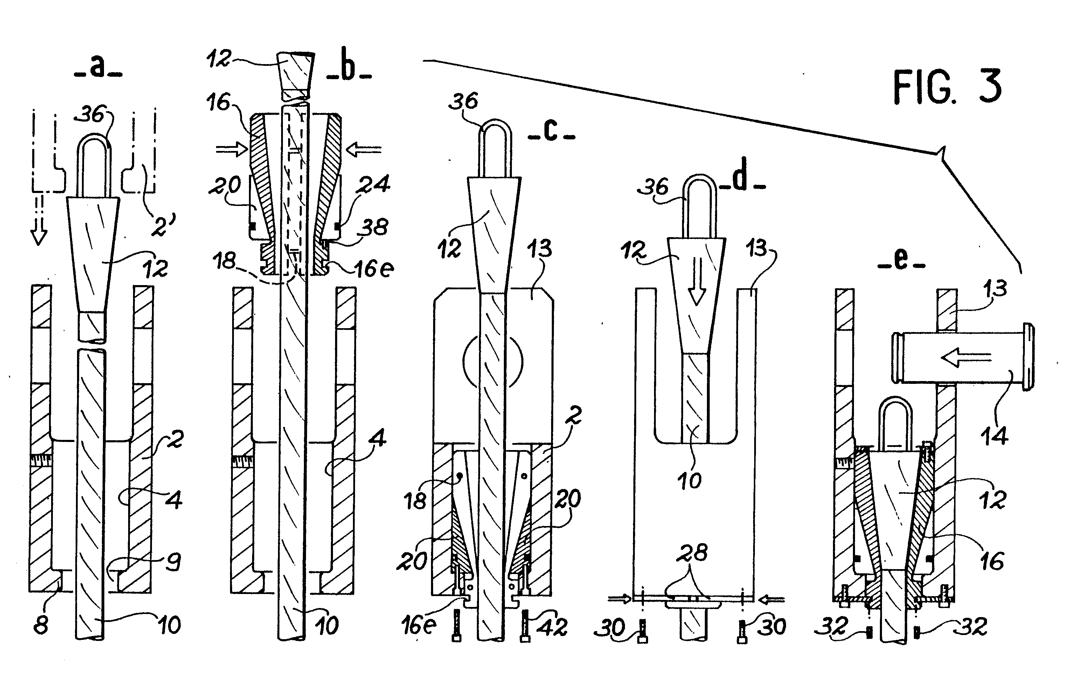

Le dispositif de fixation représenté sur la figure 1 se compose d'un culot de maintien 2 de forme générale cylindrique. Ce culot comporte un logement cylindrique 4 (voir figure 3a) pour recevoir un ensemble de fixation 6 qui sera décrit plus en détail ultérieurement. A sa partie inférieure, en considérant la figure 1, le logement 4 est fermé par un fond 8 dans lequel est prévue une ouverture de passage cylindrique 9 dont le diamètre est suffisamment grand pour permettre le passage du câble 10 muni d'un embout moulé 12 de forme tronconique. A sa partie supérieure, en considérant la figure 1, le culot de maintien présente une chape femelle 13 formée de deux parois parallèles percées de deux trous en regard pour recevoir un axe 14 destiné à coopérer avec la chape mâle (non représentée) d'une installation à laquelle le câble doit être fixé. Un anneau de manutention 15 est vissé dans le culot 2.

L'ensemble de fixation 6 est constitué de deux demi-coquilles 16 symétriques par rapport à un plan de symétrie perpendiculaire au plan de la figure 1. Chacune de ces deux demi-coquilles comporte une face interne 16a de forme tronconique, de même angle de conicité que l'embout moulé 12. Chaque bague comporte également une partie cylindrique 16b et une partie tronconique externe 16c. L'angle de conicité de la surface externe 16c est plus important que l'angle de la surface conique 16a.

Des pions de centrage 18, quatre par exemple, assurent le positionnement des deux demi-coquilles 16 l'une par rapport à l'autre afin que les surfaces coniques interne 16a et externe 16b soient parfaitement coaxiales.

Chacune des deux demi-coquilles 16 comporte encore une partie de forme générale cylindrique comportant un alésage interne dont le diamètre est légèrement supérieur au diamètre extérieur du câble 10 et un diamètre extérieur plus petit que l'ouverture pratiquée dans le fond 8, afin de pouvoir passer au travers de cette ouverture. Une gorge circulaire 16e est pratiquée dans la partie 16d. Cette gorge est destinée à recevoir deux demi-rondelles 28 qui sont fixées par des vis 30 sur le culot de maintien 2. Deux vis de pression 32 sont vissées dans la face terminale de la partie cylindrique 16e. Ces vis prennent appui sur les deux demi-rondelles 28. Elles servent à plaquer l'une contre l'autre les surfaces conique externe 16c et conique interne des coquilles et des demi-bagues, respectivement.

L'ensemble de fixation 6 comprend également deux demi-bagues 18, symétriques l'une par rapport à l'autre, mais dont le plan de joint est décalé angulairement, de préférence de 90°, par rapport au plan de joint des deux demi-coquilles 16.

Les deux demi-bagues 20 présentent chacune une gorge 22, ces deux demi-gorges formant une gorge complète pour recevoir des moyens de solidarisation provisoire de ces deux bagues l'une par rapport à l'autre. Ces moyens de solidarisation sont constitués par exemple par un fil de fer torsadé 24 inséré dans la gorge 22. Ce fil de fer a pour but de maintenir les deux bagues serrées l'une contre l'autre pendant le montage, comme on l'expliquera plus en détail ultérieurement.

Le centrage des deux demi-bagues 20 l'une par rapport à l'autre est également assuré par des pions de centrage disposés dans leur plan de joint (non représentés).

Enfin, une rondelle de fermeture 34 est fixée, par exemple au moyen de vis, sur les deux demi-coquilles 16. Cette rondelle a pour but d'empêcher l'embout 12 de sortir du logement constitué par les faces 16a des deux demi-coquilles.

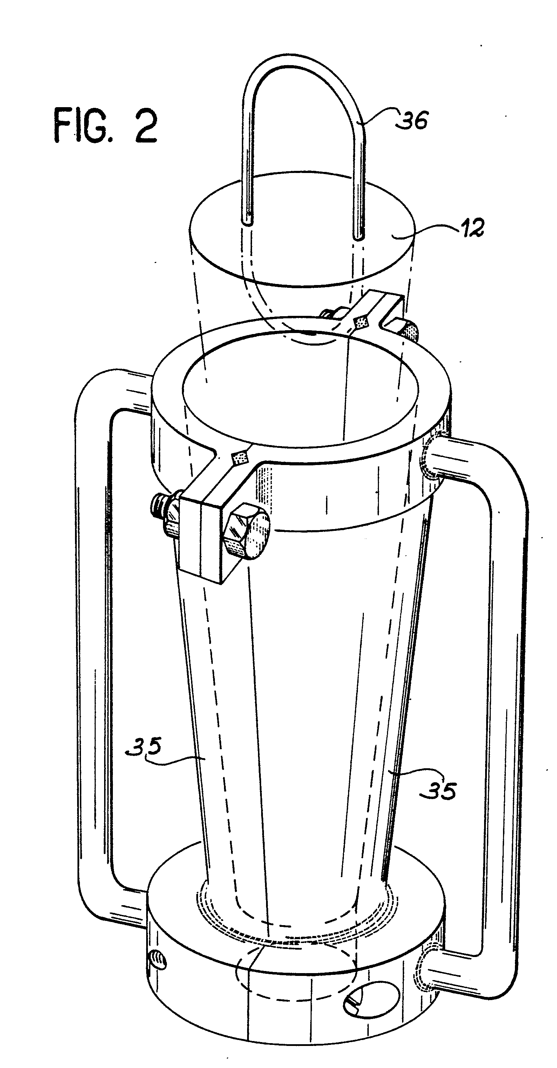

On a représenté sur la figure 2 une vue en perspective d'un moule qui permet de réaliser un embout tronconique à l'extrémité d'un câble que l'on désire fixer. Ce moule est composé de deux demi-parties symétriques 35 assemblées entre elles selon leur plan de joint, par exemple au moyen de vis. Les demi-moules sont mis en place autour de l'extrémité du câble, puis on les serre au moyen desdites vis. Le moule présente une forme interne de conicité appropriée. On verse un métal liquide, par exemple du zinc de haute pureté, dans le moule, une estrope 36 ayant été préalablement insérée dans ce dernier. Cette estrope a pour but de faciliter la manutention de l'embout. Lorsque le métal liquide est refroidi, on peut desserrer les deux parties du moule et démouler l'embout.

On a représenté sur les figures 3a à 3e les différentes étapes du montage d'un dispositif de fixation d'un culot de maintien sur un câble comportant un embout tronconique obtenu par moulage, comme expliqué en référence à la figure 2.

On passe tout d'abord le culot 2 sur le câble terminé par son embout tronconique 12 (figure 3a). A cet effet, l'ouverture 9 prévue dans le fond 8 de l'embout est suffisamment grande pour permettre son passage autour du plus grand diamètre de l'embout 12.

On met en place les deux demi-coquilles 16 autour du câble, sous l'embout 12, puis les deux demi-bagues 20, orientées à 90 par rapport aux deux demi-coquilles 16, autour de ces dernières - (figure 3b). L'ensemble est maintenu par une ligature de fils de fer 24 insérée dans la gorge 22 des demi-bagues, de manière que la torsade ne fasse pas saillie de cette gorge.

De préférence, un ergot de positionnement est inséré dans l'une des deux demi-bagues 20. Cet ergot de positionnement 38 vient se loger dans une rainure correspondante 40 formée dans la partie cylindrique 16d de l'une des deux demi-coquilles 16. Lorsque cet ergot est en place, on est assuré d'une orientation correcte des coquilles par rapport aux bagues. Les cônes externe et interne sont de préférence graissés sur leur surface avant montage.

Selon la figure 3c, on enfile l'ensemble 6 formé par les demi-bagues et les demi-coquilles dans le logement cylindrique 4 du culot 2. Deux vis 42 assurent un contact sans serrage entre le culot de maintien 2 et chacune des deux demi-bagues 20.

Selon la figure 3d, on met en place les deux demi-rondelles 28 dans la gorge 16e et on les fixe sur le culot 2 au moyen des vis 30. Les deux demi-rondelles 28 ont pour fonction d'empêcher l'ensemble constitué par les bagues et les coquilles de sortir du logement 4.

Selon la figure 3e, on visse les deux vis de pression 32. Celles-ci viennent en pression sur les deux demi-rondelles 28 pour assurer un contact parfait des surfaces coniques interne et externe des bagues et des coquilles, respectivement. Du fait de ce rattrapage de jeu, elles immobilisent l'ensemble à l'intérieur du culot de maintien lors des manipulations de celui-ci. On enfile alors l'embout de zinc 12 dans le logement constitué par les surfaces coniques internes 16a des coquilles 16 et on met en place la rondelle de fermeture 34 pour emprisonner l'embout 12.

Le démontage des deux demi-coquilles 16 s'effectue en appliquant quelques coups de masse, de préférence une masse en cuivre, sur l'extrémité de la partie cylindrique 16 de ces pièces, après avoir démonté la rondelle de fermeture 34, les deux demi-rondelles 28 et dévissé les vis 42. En effet, les demi-bagues 20 présentent un diamètre extérieur plus grand que celui des demi-coquilles 16. Par ailleurs, l'angle de conicité intérieure des demi-bagues est supérieur à celui des demi-coquilles 16. Cela permet une déformation des demi-coquilles sous l'action de l'embout moulé 12 lors de la mise en charge du câble.

## Revendications

1. Dispositif de fixation d'un culot de maintien sur l'extrémité d'un câble (26), cette extrémité étant munie d'un embout (12) tronconique, caractérisé en ce qu'il comprend un culot de maintien (22), deux demi-coquilles (16) présentant chacune une surface interne (16a) prévue pour s'adapter à l'embout tronconique (12) et une surface externe - (16b) comportant une partie tronconique (16c), deux demi-bagues (20) comportant chacune une surface interne qui s'adapte à la partie tronconique (16c) des demi-coquilles (16), ledit culot de maintien comportant un logement (4) pour la réception des deux demi-coquilles (16) et des deux demi-bagues (20).

2. Dispositif selon la revendication 1, caractérisé en ce que chacune des deux demi-coquilles (16) comporte une partie cylindrique (16d) qui fait saillie au-delà du culot de maintien (2), une rainure (16e) étant prévue dans la partie cylindrique (16d) pour recevoir deux demi-rondelles (28).

3. Dispositif selon l'une quelconque des revendications 1 et 2, caractérisé en ce que chacune des deux demi-coquilles (16) comporte une vis de pression (32) qui prend appui sur lesdites demi-rondelles (28) pour appliquer l'une contre l'autre les surfaces coniques desdites demi-bagues (20) et desdites demi-coquilles (16).

4. Dispositif selon l'une quelconque des revendications 1 à 3, caractérisé en ce que chacune desdites demi-bagues (20) comporte une gorge - (22) pour recevoir des moyens de solidarisation - (24) pour solidariser lesdites demi-bagues l'une à l'autre.

5. Dispositif selon l'une quelconque des revendications 1 à 4, caractérisé en ce que des pions de centrage (18) sont disposés entre lesdites demi-coquilles (16).

6. Dispositif selon l'une quelconque des revendications 1 à 4, caractérisé en ce que des pions de centrage sont disposés entre lesdites demi-bagues (20).

7. Dispositif selon l'une quelconque des revendications 1 à 6, caractérisé en ce qu'un ergot d'indexage (38) assure une orientation angulaire convenable des demi-bagues (20) par rapport aux demi-coquilles (16).

FIG. 1

FIG. 2

FIG. 3

_a_

_b_

_c_

_d_

_e_

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A- 263 044 (BAKER) <br> * En entier * | 1 | F 16 G 11/04 |
| A | US-A-1 384 489 (SHAFER) <br> * Page 1, lignes 48-83; figure 1 * | 1 | |
| A | GB-A- 378 021 (BULLERS) <br> * Page 3, lignes 98-114; figure 1 * | 1 | |
| A | GB-A-1 209 891 (PERMALI) | | |
| A | US-A-1 408 144 (SNOW) | | DOMAINES TECHNIQUES RECHERCHES (Int. Cl.4) |
| A | US-A-3 600 014 (HARRIS) | | F 16 G <br> H 02 G <br> E 04 C |

Le présent rapport de recherche a été établi pour toutes les revendications

| Lieu de la recherche | Date d'achèvement de la recherche | Examinateur |
|---|---|---|
| LA HAYE | 03-02-1987 | BARON C. |